# EUROPÄISCHE PATENTSCHRIFT

(11) **EP 2 086 072 B1**
(45) Veröffentlichungstag und Bekanntmachung des Hinweises auf die Patenterteilung: **20.11.2019**
(21) Anmeldenummer: 09001073.7
(22) Anmeldetag: 27.01.2009
(51) Int. Cl.: H01S 3/08, H01S 3/115, H01S 3/10

(54) **Laseranordnung**
Laser assembly
Agencement laser

(30) Priorität: 29.01.2008 DE 102008006661
(43) Veröffentlichungstag der Anmeldung: 05.08.2009
(73) Patentinhaber: Institut Franco-Allemand de Recherches de Saint-Louis, 68300 Saint-Louis Cedex (FR)
(72) Erfinder: Eichhorn, Marc, 79736 Rinckenbach (DE)

(56) Entgegenhaltungen:
- KR-A- 20050 017 074

## Beschreibung

Die Erfindung betrifft eine Laseranordnung zur Erzeugung hochenergetischer Laserpulse.

Aus der DE 41 02 409 C2 ist eine Laseranordnung bekannt. Sie umfasst folgende Elemente, die nacheinander entlang der optischen Achse angeordnet sind:
µ einen Auskoppelspiegel,
   - ein Lasermedium,
   - einen phasenkonjugierenden Spiegel (PKS) auf der Basis einer stimulierten Brillouin-Streuung (SBS),
   - einen Endspiegel.

Der Auskoppelspiegel und der Endspiegel bilden einen Startresonator, wogegen der Auskoppelspiegel und der phasenkonjugierende Spiegel einen Hauptresonator bilden. Mit einem phasenkonjugierenden Spiegel erzielt man im Spiegelbetrieb oder Betrieb des Hauptresonators eine gute Strahlqualität. Die einzelnen Lichtwellen werden genau in sich zurückgeworfen und optische Fehler im Lasermedium nicht aufaddiert, sondern beim Zurücklaufen der Lichtwellen im Lasermedium nahezu wieder rückgängig gemacht. Im Lasermedium tritt der Effekt einer zeitlich variablen thermischen Linse auf. Dies wird jedoch durch den phasenkonjugierenden Spiegel ausgeglichen, so dass jeder Laserpuls von Anfang an eine gute Strahlqualität aufweist. Bei dem Bekannten ist zwischen dem phasenkonjugierenden Spiegel und dem Endspiegel ein Grauglas eingesetzt. Das Grauglas, das im Ausführungsbeispiel eine Transmission von 20 % aufweist, verringert die Güte des Startresonators. Die Erzeugung eines einzelnen Laserpulses hoher Energie erfolgt wie nachfolgend beschrieben. Zunächst pumpt man das Lasermedium. Hierzu zündet man eine Anregungslampe. Im Startresonator setzt eine Laserstrahlbildung ein. Der phasenkonjugierende Spiegel ist noch durchlässig, da die Brillouin-Schwelle noch nicht erreicht ist. Das Pumpen des Lasermediums wird fortgesetzt. Dabei verstärkt sich der Laserstrahl innerhalb des Startresonators. Wenn im Lasermedium eine hohe Energie aufgrund des Pumpens gespeichert ist und sich der Laserstrahl weiter verstärkt, wird die Brillouin-Schwelle überschritten und der phasenkonjugierende Spiegel gezündet. In einem sehr kurzen Zeitraum, der im Nanosekundenbereich liegt, wechselt der phasenkonjugierende Spiegel von seiner anfänglich hohen Lichtdurchlässigkeit auf eine Spiegelfunktion um. Dadurch erfolgt der Hauptresonator-Betrieb und der Startresonator wird entkoppelt. Da nach dem Zünden des phasenkonjugierenden Spiegels der Grad der Reflexion im Nanosekundenbereich ansteigt, steigt auch im gleichen kurzen Zeitabschnitt die Güte des Hauptresonators an. Dies bedeutet, dass der phasenkonjugierende Spiegel zusätzlich die Funktion eines Güteschalters im Hauptresonator einnimmt. Die hohe gespeicherte Energie im Lasermedium wird innerhalb des Hauptresonators in einen Laserpuls hoher Leistung umgesetzt und ein Teil des Laserpulses tritt aus dem Auskoppelspiegel heraus. Die Höhe des Grauwertes des Grauglases ist so mit der vorgegebenen Pumpenergie abgestimmt, dass nur ein starker Puls gegen Ende des Pumpvorganges erzeugt wird. Wird beispielsweise mit einer hohen Leistung und einer langen Pumpdauer gepumpt, wählt man ein Grauglas mit einem höheren Grauwert. Dadurch wird die Güte des Startresonators herabgesetzt und dadurch zündet der phasenkonjugierende Spiegel erst später in gewünschter Weise am Ende des Pumpvorganges, um einen Einzelpuls entstehen zu lassen.

Der Nachteil beim Bekannten liegt darin, dass trotz des erhaltenen, zeitlich stabilen Pulses die Verzugszeit schwierig vorher zu bestimmen ist. Denn die Verzugszeit, also die Zeitdauer zwischen dem Beginn des Pumpvorganges und der Pulsemission, hängt von vielen externen Parametern ab, wie zum Beispiel von der Höhe der Pumpenergie, dem zeitlichen Verlauf der Pumpleistung, oder dem Grauwert des eingesetzten Grauglases. Auch spielen Umgebungsbedingungen eine Rolle, wie die Einwirkung von mechanischen Schwingungen und Stößen. Daher ist der Zeitpunkt des heraustretenden Laserpulses nicht genau vorhersehbar, auch wenn der Beginn des Pumpens bekannt ist.

Ein weiterer Nachteil liegt darin, dass die Verwendung eines Grauglases eines bestimmten Grauwertes auch die Energie des erzielten Pulses festlegt. Denn, wie zuvor bereits dargelegt, ist die Pumpleistung und der Pumpverlauf genau auf einen bestimmten Grauwert des Grauglases abgestimmt, damit sich der Laserpuls am Ende des Pumpens bildet.

Als weiteren Stand der Technik wird die KR 10 2005 0017074 A genannt. Die KR 10 2005 0017074 A zeigt eine Laseranordnung mit den Merkmalen des Oberbegriffes des Anspruches 1.

Der Erfindung liegt die Aufgabe zu Grunde, eine gattungsgemäße Laseranordnung so auszubilden, dass ein Laserpuls variabler und einstellbarer Energie hinsichtlich seines Zeitpunktes mit einer hohen Genauigkeit vorher bestimmbar ist. Dabei soll eine hohe Strahlqualität erzielt werden.

Diese Aufgabe der Erfindung wird erfindungsgemäß durch die Merkmale des Anspruches 1 gelöst, ferner durch die Merkmale des nebengeordneten Verfahrensanspruchs 9.

Die Vorteile der Erfindung bestehen darin, dass mit der Laseranordnung ein Laserpuls definierter Stärke und vorbestimmten Zeitpunkts erzeugbar ist. Die Laseranordnung umfasst folgende Elemente, die nacheinander entlang der optischen Achse angeordnet sind: Einen Auskoppelspiegel, ein Lasermedium, einen phasenkonjugierenden Spiegel (PKS) auf der Basis einer stimulierten Brillouin-Streuung (SBS) und einen Endspiegel. Dabei bilden der Auskoppelspiegel und der Endspiegel einen Startresonator, wogegen der Auskoppelspiegel und der phasenkonjugierende Spiegel einen Hauptresonator darstellen.

Zwischen dem phasenkonjugierenden Spiegel und dem Endspiegel ist ein steuerbarer Modulator angeordnet, um den Startresonator zu einem gewünschten Zeitpunkt freizugeben. Damit ist es zum einen möglich, das Lasermedium bis zum höchstmöglichen Wert zu pumpen, um einen Laserpuls maximaler Energie zu erzeugen. Zum andern ist es möglich, das Lasermedium weniger stark zu pumpen, um einen Laserpuls geringerer Leistung zu erhalten. Mit der Freigabe des Startresonators kann der Hauptresonator nach dem Zünden des phasenkonjugierenden Spiegels seinen kurzzeitigen Betrieb aufnehmen. Da die Verzugszeit, die zwischen der Freigabe des Startresonators und der Laserpuls-Emission liegt, äußerst gering und für beliebige externe Parameter berechenbar ist, kann der Zeitpunkt der Laserpuls-Emission durch den schaltbaren Modulator genau vorgegeben werden.

Nach dem Zünden des phasenkonjugierenden Spiegels wird der Startresonator abgekoppelt. Durch die Abkoppelung wird der Modulator von einem großen Teil der Laserpulsenergie verschont. Dadurch ist es möglich, eine Vielzahl von steuerbaren Modulatoren einzusetzen.

Das Verfahren zum Betreiben der Laseranordnung weist folgende Schritte auf:
- Pumpen des Lasermediums mit einer vorbestimmten Pumpleistung, wobei der Modulator den Startresonator sperrt. Mit der Sperrung des Startresonators bewirkt man, dass der Hauptresonator nicht in Aktion treten kann.
- Einstellen des Pumpbetriebes und Schalten des Modulators auf Freigebung des Startresonators. Es baut sich ein Laserpuls im Startresonator auf. Der phasenkonjugierende Spiegel (PKS) zündet und wechselt von einer hohen Strahldurchlässigkeit auf eine Spiegelfunktion. Der Laserpuls baut sich weiter auf im Hauptresonator und ein Teil des Laserpulses tritt aus dem Auskoppelspiegel heraus.

Gemäß der Erfindung ist der Modulator derart ausgebildet und über eine Rechner-Einheit schaltbar, dass er den Startresonator unmittelbar sperrt, nachdem der phasenkonjugierende Spiegel von dem Durchlassbetrieb auf den Spiegelbetrieb geschaltet hat. Derzeitige phasenkonjugierende Spiegel weisen im Spiegelbetrieb eine Reflektivität von 90 % auf. Dies bedeutet, dass im Spiegelbetrieb in unerwünschter Weise 10% aus dem phasenkonjugierenden Spiegel in Richtung Modulator und Endspiegel heraustreten. Dadurch, dass der steuerbare Modulator den Startresonator sperrt, können nach der Sperrung keine störenden Rückreflexe der durch den phasenkonjugierenden Spiegel transmittierten Restintensität auftreten. Die genannten störenden Rückreflexe würden auch den Aufbau des Laserpulses in dem Hauptresonator negativ beeinflussen. Die Strahlqualität des heraustretenden Laserpulses ist erhöht. Allerdings ist ein schaltbarer Modulator erforderlich, der im Nanosekundenbereich reagiert. Daher ist gemäß einer hierauf aufbauenden Ausgestaltung der Erfindung der Modulator als elektro-optischer Güteschalter ausgebildet.

Gemäß einer Ausgestaltung der Erfindung sind der steuerbare Modulator und der phasenkonjugierende Spiegel so ausgebildet und so zusammenwirkend, dass das Verhältnis der Laserenergie der Laserstrahlung, die durch den Modulator hindurchgeht, zur gesamten Laserenergie der Laserstrahlung, die durch den Strahlengang zwischen dem Lasermedium und dem phasenkonjugierenden Spiegel hindurchgeht, kleiner als 0,2 ist. Steuerbare Modulatoren können durch eine hindurchgehende Laserstrahlung hoher Energie leicht zerstört werden. Mit der Maßnahme schützt man den oftmals empfindlichen, steuerbaren Modulator, da die auf den Modulator einwirkende Laserpulsenergie begrenzt wird.

Gemäß einer weiteren Ausgestaltung der Erfindung übersteigt die Energie eines Laserpulses 50 mJ. Diese Energie ermöglicht wehrtechnische Anwendungen, um gegnerische optronische Geräte zerstören zu können.

Gemäß einer weiteren Ausgestaltung der Erfindung ist das Lasermedium ein Kristall, der mit Thulium, Holmium oder Erbium dotiert ist. Mit einem derartigen Kristall kann eine Laseranordnung aufgebaut werden, die bei hoher Laserenergie eine kompakte Bauweise ermöglicht und bei Wellenlängen größer als 1,4 µm emittiert.

Gemäß einer weiteren Ausgestaltung der Erfindung weist das Lasermedium Brewster-Endflächen auf. Dadurch kann sich ein Polarisator im Strahlengang der Laseranordnung sowie eine Antireflex-Beschichtung des Lasermaterials erübrigen. Letzteres erhöht die Zerstörschwelle der Oberfläche des Lasermediums.

Gemäß einer weiteren Ausgestaltung der Erfindung umfasst die Laseranordnung einen Seed-Laser, mit dem ein Seed-Lasersignal in den Startresonator und/oder den Hauptresonator einkoppelbar ist. Dadurch wird der Aufbau des Laserpulses im anfänglichen Startresonator-Betrieb erleichtert. Im sich anschließenden Hauptresonator-Betrieb wird der Laserpuls stabilisiert. Der Seed-Laser erhöht die Strahlqualität und ermöglicht höhere Laserpulsenergien.

Ausführungsbeispiele der Erfindung werden nachfolgend an Hand der Zeichnungen näher erläutert. Dabei zeigen:
Fig. 1 eine Laseranordnung, mit eingetragenen Kennwerten;
Fig. 2a eine erste alternative Laseranordnung;
Fig. 2b eine zweite alternative Laseranordnung;
Fig. 3 ein Diagramm, in dem die Pumpleistung und die Laserpulsleistung, die nur angedeutet ist, über die Zeit aufgetragen ist, wobei der Maßstab der Zeitachse im Mikrosekunden-Bereich und der Maßstab der Pump- und Pulsleistung im Watt-Bereich liegt;
Fig. 3a ein Diagramm für einen innerhalb von Nanosekunden schaltbaren Modulator, bei dem der Schließfaktor des Modulators über die Zeit aufgetragen ist, wobei die Zeitachse den gleichen Maßstab wie in Fig. 3 aufweist;
Fig. 3b ein Diagramm für einen nicht innerhalb von Nanosekunden schaltbaren Modulator, wobei die Zeitachse ebenfalls den gleichen Maßstab wie in Fig. 3 aufweist;
Fig. 4 eine Einzelheit IV des Diagramms nach Fig. 3, um den sich aufbauenden Laserpuls innerhalb des Hauptresonators zu illustrieren, wobei der Maßstab der Zeitachse nunmehr im Nanosekunden-Bereich und der Maßstab der Pulsleistung nunmehr im Megawatt-Bereich liegt;
Fig. 4a eine Einzelheit IVa des Diagramms nach Fig. 3a für den innerhalb von Nanosekunden schaltbaren Modulator;
Fig. 4b eine Einzelheit IVb des Diagramms nach Fig. 3b für einen nicht innerhalb von Nanosekunden schaltbaren Modulator.

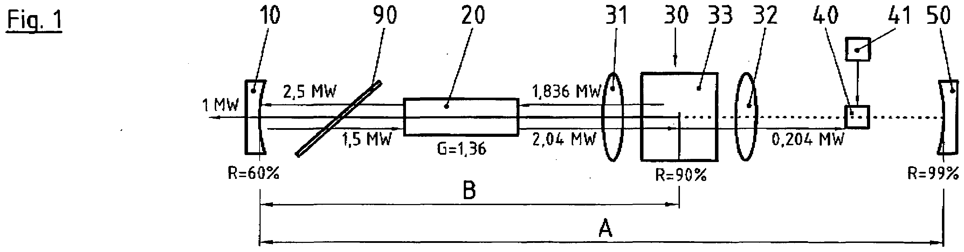

Die Fig. 1 zeigt eine Laseranordnung. Sie umfasst folgende Elemente, die nacheinander entlang der optischen Achse angeordnet sind:
einen Auskoppelspiegel 10,
ein Lasermedium 20,
einen phasenkonjugierenden Spiegel (PKS) 30 auf der Basis einer stimulierten Brillouin-Streuung (SBS),
einen steuerbaren Modulator 40,
einen Endspiegel 50.

Der Auskoppelspiegel 10 und der Endspiegel 50 bilden einen Startresonator A, wogegen der Auskoppelspiegel 10 und der phasenkonjugierende Spiegel 30 einen Hauptresonator B darstellt.

Die Fig. 1 zeigt, dass zwischen dem Auskoppelspiegel 10 und dem Lasermedium 20 noch ein Polarisator 90 angeordnet ist. Der Polarisator bewirkt in der vorliegenden Laseranordnung eine linear polarisierte Ausgangsstrahlung des Lasers, welche für bestimmte Anwendungen, wie zum Beispiel der Einsatz einer nichtlinearen Optik, erforderlich ist.

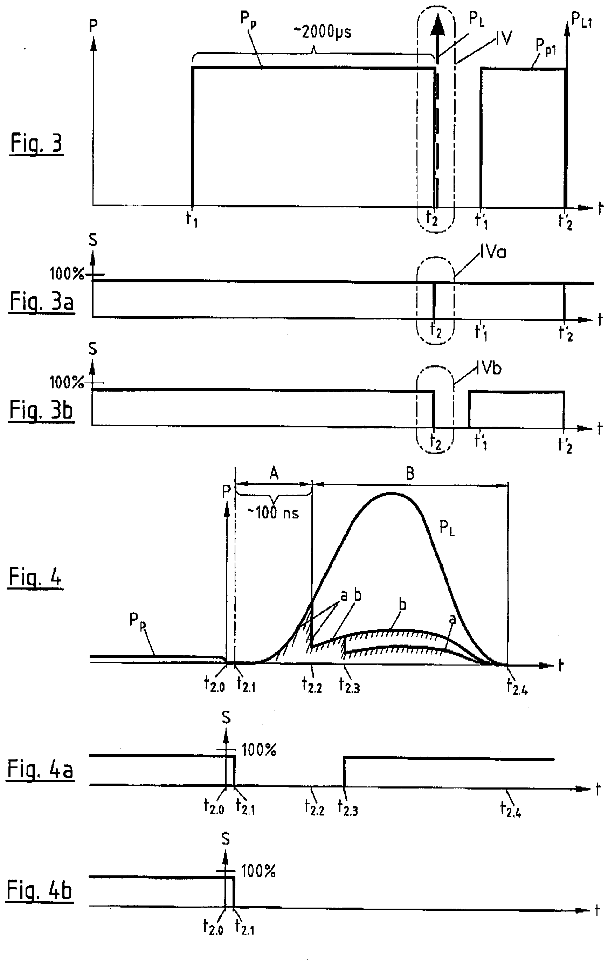

Die Fig. 3 illustriert das Pumpen des Lasers. Daher liegt der Maßstab der Zeitachse im Mikro-Sekunden-Bereich und der Maßstab der Leistung beläuft sich im Watt-Bereich. Die Fig. 4 dagegen illustriert den Verlauf des kurzzeitigen Laserpulses. Entsprechend liegt der Maßstab der Zeitachse im Nanosekunden-Bereich und der Maßstab der Leistung im Megawatt-Bereich.

Das Verfahren zum Betreiben der Laseranordnung nach Fig. 1 weist folgende Schritte auf:
a) Zunächst erfolgt das Pumpen des Lasermediums 20 mit einer vorbestimmten Pumpleistung. Dies zeigt Fig. 3. Das Pumpen erfolgt im Zeitraum zwischen t₁ und t₂. Vor und während des Pumpens sperrt der Modulator 40 den Startresonator A. Dies ist in Fig. 3a und Fig. 3b zu sehen. Der dargestellte Schließfaktor ist in dem genannten Zeitraum nahe 100 %.
b) Dann folgt das Einstellen des Pumpbetriebes und Schalten des Modulators 40 auf Freigebung des Startresonators A. In Fig. 4 mit dem großen Maßstab der Leistung und sehr kleinem Maßstab der Zeit ist das Ende des Pumpbetriebes zum Zeitpunkt t_{2.0} nur angedeutet eingezeichnet. Denn die Pumpleistung Pp tritt wegen des großen Maßstabes der Leistung kaum in Erscheinung. In Fig. 4a, dem Fall der Verwendung eines schnell schaltbaren Modulators, ist wenige Nanosekunden nach t_{2.0} zum Zeitpunkt t_{2.1} der Wechsel von einem hohen auf einen sehr niedrigen Schließfaktor eingezeichnet. Dadurch wird der Startresonator A freigegeben. Das Gleiche gilt für den Fall der Verwendung eines weniger schnell schaltbaren Modulators, wie in Fig. 4b dargestellt.
c) Im Startresonator baut sich ein Laserstrahl auf. Der phasenkonjugierende Spiegel (PKS) zündet und wechselt von einer hohen Strahldurchlässigkeit auf seine Spiegelfunktion um. Die Zündung des phasenkonjugierenden Spiegels findet zum Zeitpunkt t_{2.2} statt. Dies bedeutet, dass der Betrieb des Startresonators von t_{2.1} bis t_{2.2} stattfindet.
   c1) Nur im Falle des Vorliegens eines innerhalb von Nanosekunden schaltbaren Modulators ist folgender Schritt eingefügt:
      Schalten des Güteschalters 40 auf Sperrung des Startresonators A.
      Hierzu ist der Modulator 40 derart ausgebildet und über eine Rechner-Einheit 41 schaltbar, dass er den Startresonator A unmittelbar sperrt, nachdem der phasenkonjugierende Spiegel 30 von dem Durchlassbetrieb auf den Spiegelbetrieb geschaltet hat. Ein elektro-optischer Güteschalter ist als Modulator geeignet. Illustriert ist diese Alternative, wie schon in der Kurzbeschreibung der Figuren dargelegt, in Fig. 3a und Fig. 4a. Der große Zeitmaßstab in Fig. 3a lässt nur einen Strich zum groben Zeitpunkt t₂ zu, wogegen die stark gestreckte Zeitachse nach Fig. 4a den punktgenauen Zeitpunkt t_{2.3} wiedergibt, an dem der Modulator den Startresonator sperrt.
   c2) In dem anderen Fall eines nicht innerhalb von Nanosekunden schaltbaren Modulators bleibt der Modulator geöffnet. Illustriert ist diese Alternative, wie schon in der Kurzbeschreibung der Figuren dargelegt, in Fig. 3b und Fig. 4b.
d) Der Laserpuls baut sich weiter im Hauptresonator B auf und ein Teil des Laserpulses tritt aus dem Auskoppelspiegel 10 heraus.

Die Laseranordnung verwendet eine Eigenschaft des SBS-PKS, nach seiner Zündung oder Aktivierung eine hohe Reflektivität aufzubauen. Damit schützt man den steuerbaren Modulator vor seiner Zerstörung durch hohe Intensitäten.

Die Fig. 4 illustriert, dass die Verzugszeit, die zwischen der Freigabe des Startresonators zum Zeitpunkt t_{2.1} und der Laserpuls-Emission liegt, äußerst gering und daher vernachlässigbar ist. Daher kann der Zeitpunkt der Laserpuls-Emission mit Hilfe des schaltbaren Modulators im 100 ns-Bereich genau vorgegeben werden.

Die in Fig. 1 dargestellte Laseranordnung ist dazu ausgebildet, etwa zehn Laserpulse in kurzer Folge zu emittieren. In Fig. 3 ist zu Illustration noch ein zweiter Laserpuls in dem Zeitintervall zwischen t₁' und t₂' eingezeichnet. Zum Zeitpunkt t₁', also dem Beginn des zweiten Pumpens, ist der innerhalb von Nanosekunden schaltbare Modulator nach Fig. 3a wie auch der langsam schaltbare Modulator nach Fig. 3b geschlossen.

Am Beispiel des zweiten Laserpulses P_{L1} in Fig. 3 ist illustriert, dass das Lasermedium weniger stark gepumpt ist und dass dadurch ein Laserpuls P_{L1} geringerer Leistung erzeugt wird. Wie aus Fig. 3 mit dem großen Zeitmaßstab abzuleiten ist, gibt der Modulator am Ende des Pulsvorganges zum Zeitpunkt t₂' den Startresonator frei, woraufhin unmittelbar die Emission des zweiten Laserpulses P_{L1} erfolgt.

Der steuerbare Modulator 40 und der phasenkonjugierende Spiegel 30 sind so ausgebildet und so zusammenwirkend, dass das Verhältnis der Laserenergie der Laserstrahlung, die durch den Modulator 40 hindurchgeht, zur gesamten Laserenergie der Laserstrahlung, die durch den Strahlengang zwischen dem Lasermedium 20 und dem phasenkonjugierenden Spiegel 30 hindurchgeht, kleiner als 0,2 ist. Bezogen auf Fig. 4 bedeutet dies zum einen, dass die Fläche unterhalb der Kurve P_{L} zwischen t_{2.1} und t_{2.4} die gesamte Laserenergie der Laserstrahlung wiedergibt. Zum anderen bedeutet dies, dass maximal 20 % dieser Energie, dies entspricht 20% der vorgenannten Fläche, als Laserstrahlung durch den Modulator hindurchgehen. Dies gilt für alle schaltbaren Modulatoren.

Die Leistungskurve der Laserstrahlung, die durch den Modulator hindurchgeht, ist in Fig. 4 eingezeichnet. Mit a ist die Kurve für einen innerhalb von Nanosekunden schaltbaren Modulator bezeichnet, wogegen die Kurve b für einen langsam schaltbaren Modulator gilt. Zwischen t_{2.1} und t_{2.2}, also im Startresonator-Betrieb, wird der Modulator mit der vollen anfänglichen Pulsleistung beaufschlagt. Ab dem Punkt t_{2.2}, also im Hauptresonator-Betrieb, kann der Modulator nur mit der Restleistung beaufschlagt werden, die durch den phasenkonjugierenden Spiegel im Spiegelbetrieb hindurchgeht. Da die Spiegelreflexion bei 90 % liegt, können nach dem Zeitpunkt t_{2.2} maximal 10 % den Modulator auf der dem PKS zugewandten Seite treffen. Im weiteren Zeitverlauf erweist sich die Alternative des schnell schaltbaren Modulators als günstig. Die Sperrung zum Zeitpunkt t_{2.3} bewirkt, dass die vorgenannten 10 % aufgrund der Sperrung nicht mehr durch den Spiegel 50 zurückreflektiert werden. Somit wird die gesamte durch den Modulator propagierende Energie halbiert. Dies dient dem weiteren Schutz des oftmals empfindlichen Modulators. Die Laserenergie der Laserstrahlung, die durch einen schnell schaltbaren Modulator 40 gemäß Fig. 4a hindurchgeht, ist die Fläche unterhalb der Kurve a in Fig. 4. Für einen langsam schaltbaren Modulator nach Fig. 4b gilt die Fläche unterhalb der Kurve b.

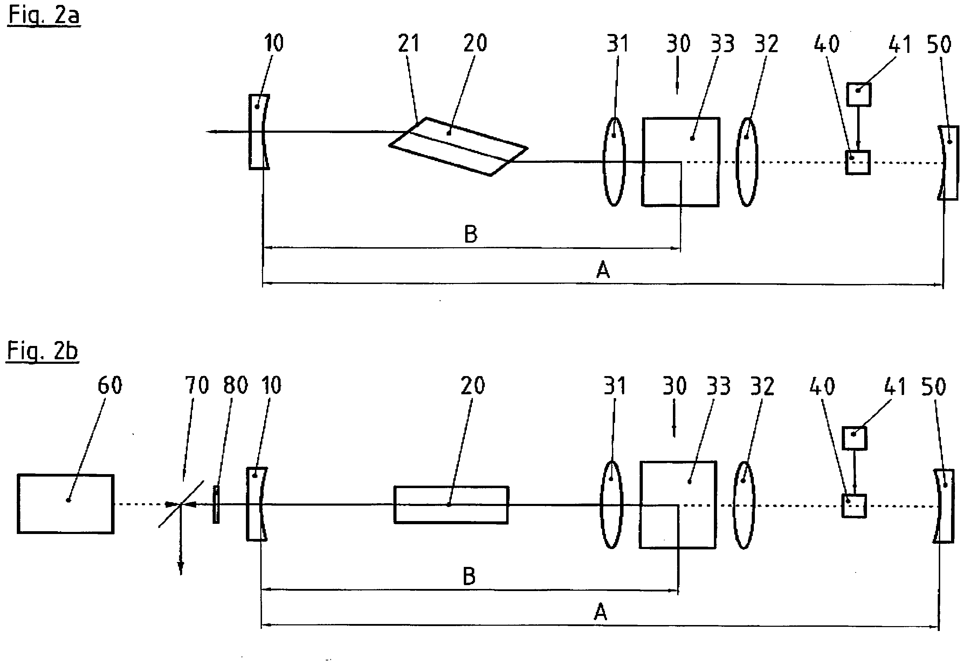

Die Fig. 2 a zeigt eine erste alternative Laseranordnung. Gegenüber der Ausführung nach Fig. 1 weist das Lasermedium 20 Brewster-Endflächen 21 auf. Dadurch können optische Beschichtungen des Lasermediums entfallen. Ebenso steigt die Zerstörschwelle des Lasermediums. Die Brewster-Endflächen wirken bereits polarisationsselektiv.

Die Fig. 2 b zeigt eine zweite alternative Laseranordnung, die einen Seed-Laser 60 aufweist. Der Seed-Laser 60 erzeugt ein niederenergetisches Seed-Signal mit einer sehr guten Strahlqualität. Der Seed-Laser koppelt das Seed-Signal über den Auskoppelspiegel 10 in den Startresonator A bzw. Hauptresonator B ein. Der Seed-Laser sorgt bereits zu Beginn der Freigabe des Startresonators für ein Photonenfeld mit einer optimalen Strahlqualität. Dadurch wird der Aufbau eines Laserpulses auf der Grundmode erleichtert. Darüber hinaus ist das Seed-Signal auch nach der Zündung des PKS vorhanden und stabilisiert den Grundmode-Betrieb im Hauptresonator. Eine Laseranordnung, die einen Seed-Laser aufweist, eignet sich für Laserpulsenergien im Bereich von einigen 100mJ bis mehr als 1 J.

Das Seed-Signal kann kontinuierlich oder gepulst sein. Im Falle eines gepulsten Seed-Lasersignals ist dieses zeitlich etwas länger als die Dauer des hochenergetischen Laserpulses. Ferner sind der Seed-Laser 60 und der steuerbare Modulator 40 miteinander synchronisiert. Damit wird erreicht, dass das Seed-Lasersignal bereits kurz vor dem Auslösen des Modulators zur Verfügung steht und über die Dauer des hochenergetischen Laserpulses aufrecht erhalten bleibt. Das longitudinale Modenspektrum und das transversale Stahlprofil oder der Grundmode des Seed-Lasers sind an den Startresonator A und den Hauptresonator B angepasst, um eine maximale Koppeleffizienz und Konsistenz mit dem SBS-Prozess zu erzielen.

Da die SBS bei der Phasenkonjugation wie bei einem passiven Spiegel durch einen Pi-Phasensprung die Polarisation von zirkular-polarisiertem Licht ändert, ist das emittierte Signal des Auskoppelspiegels 10 vom Seed-Signal durch eine Kombination aus Polarisator 70 und einer Viertelwellenplatte 80 leicht zu trennen.

Das Lasermedium 20 ist ein Kristall, der mit Thulium, Holmium oder Erbium dotiert sein kann. Im vorliegenden Beispiel ist das Lasermedium ein Ho:YAG mit einem Emissions-Wirkungsquerschnitt von 1,2 x 10⁻²⁰ cm². Die Sättigungsfluenzen liegen somit bei 8 J/cm². Alternativ kann das Lasermedium ein Tm:YAG sein. Hierbei liegt der Emissions-Wirkungsquerschnitt bei 1.5 x 10⁻²¹ cm² und es ergeben sich Sättigungsfluenzen von 43 J/cm². Die erzeugten Laserpulse weisen eine Wellenlänge von 2,09 µm bei Ho:YAG und 2,02 µm bei Tm:YAG auf. Dies entspricht dem kurzwelligen Infrarot-Bereich. IR-Suchkopfdetektoren, die in dem vorgenannten Wellenlängen-Bereich empfindlich sind, können beispielsweise mit der Laseranordnung bekämpft werden. Um IR-Suchkopfdetektoren zu zerstören, die im langwelligen IR-Bereich empfindlich sind, sind zusätzlich Konversionselemente auf der Basis einer nichtlinearen Optik einzusetzen. Die Konversionselemente wandeln den erzeugten Laserpuls mit der kurzen Wellenlänge in einen Laserpuls mit der gewünschten längeren Wellenlänge um.

In Fig. 1 sind Kennwerte des Lasers eingetragen. Die eingetragene Leistung eines einzelnen Laserpulses beträgt 1 MW. Dies ergibt sich aus einer Energie eines Laserpulses in Höhe von 100 mJ bei einer Dauer des Laserpulses von 100 ns.

Der phasenkonjugierende Spiegel 30 ist eine Baueinheit und umfasst die Linsen 31 und 32 und ein Behältnis, das mit einem unter Druck stehenden Brillouin-Medium 33 gefüllt ist. Die Linsen 31 und 32 erzeugen einen Intra-Cavity-Fokus. Das Brillouin-Medium 33 ist das Gas SF₆, das unter einem Druck von 20 Bar steht. Die SBS-Schwelle liegt bei 174 kW. Die SBS-Verstärkung beträgt 1,8 x 10⁻² cm/MW. Die SBS-Linienverschiebung beträgt ungefähr 240 MHz. Der Laserpuls macht im Hauptresonator B ca. 25 Umläufe. Dabei erfährt er eine Frequenzverschiebung von 25 x 0,24 GHz. Das sind 6 GHz. Bei der Wellenlänge von 2,09 µm entspricht dies 0,1 nm. Da dies noch innerhalb der Verstärkungsbandbreite des Lasermediums liegt, wird die PKS-Effizienz dadurch nicht beeinträchtigt.

Erreicht der PKS seine Schwelle, so steigt dessen Reflektivität schnell an und nimmt einen Wert von etwa 90 % an. Für die PKS-Reflektivität von 90 % benötigt man eine in den PKS einfallende Intensität von etwa dem 10fachen Schwellenwert. Aus der Leistungsbilanz des Resonators B bei einer PKS Reflektivität von 90% erhält man aus Konsistentgründen eine Verstärkung des Lasermediums von G=1,36.

Die Abkoppelung des schaltbaren Modulators nach dem Zünden des PKS ermöglicht die Nutzung jeglicher Art eines schaltbaren Modulators. Dabei sind gerade die Modulatoren geeignet, die von Natur aus eine geringe optische Zerstörschwelle aufweisen.

Hinsichtlich der innerhalb von Nanosekunden schaltbaren Modulatoren eignet sich ein elekto-optischer Modulator (EOM). Sein Schaltverhalten ist bereits in Fig. 3a und 4a vorgestellt worden. Der EOM weist als Material Rubidium-Titanyl-Phosphat (RTP) auf. Dieses Material ist für Wellenlängen im 2 µm-Bereich gut geeignet. Der EOM weist hohe Modulationstiefen von mehr als 99% auf. Außerdem erfolgt die Schaltung des EOM nahezu leistungslos. Der EOM weist eine geringe optische Zerstörschwelle auf. Die Abkoppelung des Startresonators schützt jedoch den EOM. Das Material RTP kann herstellungsbedingte Streuungsverluste aufweisen. In der vorliegenden Laseranordnung sind diese Verluste unbedeutend, da sie nur im Startresonator auftreten.

### Bezugszeichenliste

- 10: Auskoppelspiegel
- 20: Lasermedium
- 21: Brewster-Endflächen
- 30: phasenkonjugierender Spiegel (PKS) auf Basis stimulierter Brillouin-Streuung (SBS)
- 31: Linse
- 32: Linse
- 33: Brillouin-Medium
- 40: steuerbarer Modulator
- 41: Rechnereinheit zur Steuerung
- 50: Endspiegel
- 60: Seed-Laser
- 70: Polarisator
- 80: Viertelplatte
- 90: Polarisator
- A: Startresonator
- B: Hauptresonator
- S: Schließfaktor des Modulators

- P_{P}: erste Pumpleistungs-Kurve
- P_{P1}: zweite Pumpleistungs-Kurve

- P_{L}: erste Laserpulsleistungs-Kurve
- P_{L1}: zweite Laserpulsleistungs-Kurve
- a: Laserpulsleistungs-Kurve der Laserstrahlung, die durch einen innerhalb von Nanosekunden schaltbaren Modulator hindurchgeht
- b: Laserpulsleistungs-Kurve der Laserstrahlung, die durch einen langsam schaltbaren Modulator hindurchgeht

## Patentansprüche

1. Laseranordnung, mit folgenden Merkmalen:
a) die Laseranordnung umfasst mindestens folgende Elemente, die nacheinander entlang der optischen Achse angeordnet sind:
• einen Auskoppelspiegel (10),
• ein Lasermedium (20),
• einen phasenkonjugierenden Spiegel (30, PKS) auf der Basis einer stimulierten Brillouin-Streuung (SBS),
• einen Endspiegel (50),
b) der Auskoppelspiegel (10) und der Endspiegel (50) bilden einen Startresonator (A),
c) der Auskoppelspiegel (10) und der phasenkonjugierende Spiegel (30) bilden einen Hauptresonator (B),
d) zwischen dem phasenkonjugierenden Spiegel (30) und dem Endspiegel (50) ist ein Güteschalter angeordnet,
**dadurch gekennzeichnet,**
e) **dass** der Güteschalter ein steuerbarer Modulator (40) ist, und
f) **dass** der Modulator (40) derart ausgebildet und über eine Rechner-Einheit (41) schaltbar ist, dass er den Startresonator (A) unmittelbar sperrt, nachdem der phasenkonjugierende Spiegel (30) von dem Durchlassbetrieb auf den Spiegelbetrieb geschaltet hat.

2. Laseranordnung nach Anspruch 1, **dadurch gekennzeichnet, dass** der steuerbare Modulator (40) und der phasenkonjugierende Spiegel (30) so ausgebildet und so zusammenwirkend sind, dass das Verhältnis der Laserenergie der Laserstrahlung, die durch den Modulator (40) hindurchgeht, zur gesamten Laserenergie der Laserstrahlung, die durch den Strahlengang zwischen dem Lasermedium (20) und dem phasenkonjugierenden Spiegel (30) hindurchgeht, kleiner als 0,2 ist.

3. Laseranordnung nach Anspruch 1 oder 2, **dadurch gekennzeichnet, dass** der Modulator (40) ein elektro-optischer Güteschalter ist.

4. Laseranordnung nach einem der Ansprüche 1 bis 3, **dadurch gekennzeichnet, dass** die Laseranordnung derart ausgebildet ist, dass die Energie eines erzeugten Laserpulses 50 mJ übersteigt.

5. Laseranordnung nach einem der Ansprüche 1 bis 4, **dadurch gekennzeichnet, dass** das Lasermedium (20) ein Kristall ist, der mit Thulium, Holmium oder Erbium dotiert ist.

6. Laseranordnung nach einem der Ansprüche 1 bis 5, **dadurch gekennzeichnet, dass** das Lasermedium (20) Brewster-Endflächen (21) aufweist.

7. Laseranordnung nach einem der Ansprüche 1 bis 6, **dadurch gekennzeichnet, dass** die Laseranordnung einen Seed-Laser umfasst, mit dem ein Seed-Lasersignal in den Startresonator (A) und/oder den Hauptresonator (B) einkoppelbar ist,

8. Verfahren zum Betreiben einer Laseranordnung nach einem der Ansprüche 1 bis 7, mit folgenden Schritten:
a. Pumpen des Lasermediums (20) mit einer vorbestimmten Pumpleistung, wobei der Modulator (40) den Startresonator (A) sperrt,
b. Einstellen des Pumpbetriebes und Schalten des Modulators (40) auf Freigebung des Startresonators (A),
c. es baut sich ein Laserpuls im Startresonator (A) auf,
d. der phasenkonjugierenden Spiegel (PKS) zündet und wechselt von einer hohen Strahldurchlässigkeit auf eine Spiegelfunktion,
f. der Laserpuls baut sich weiter im Hauptresonator (B) auf und ein Teil des Laserpulses tritt aus dem Auskoppelspiegel (10) heraus,
**dadurch gekennzeichnet, dass**
nach dem Schritt d. und vor dem Schritt f. folgender Schritt eingefügt ist:
e. Schalten des Modulators (40) auf Sperrung des Startresonators A.

## Claims

1. A laser device comprising:
a) the laser device is arranged along an optical axis of the laser device and includes at least the following elements
• an outcoupling mirror,
• a laser medium,
• a phase-conjugated mirror based on stimulated Brillouin scattering,
• an end mirror,
b) the outcoupling mirror and the end mirror form a start cavity,
c) the outcoupling mirror and the phase-conjugate mirror form a main cavity,
d) a modulator is positioned between the phase-conjugate mirror and the end mirror,
**wherein,**
e) the modulator is controllable, and
f) the controllable modulator is switchable via a computer unit, such that the controllable modulator immediately blocks the start cavity once the phase-conjugate mirror switches from transparent operation to mirror operation.

2. Laser device according to claim 1, wherein the controllable modulator and the phase-conjugate mirror are operated such that a ratio of a laser radiation passing through the modulator to a total laser energy of the laser radiation which propagates between the laser medium and the phase-conjugate mirror is smaller than 0,2.

3. Laser device according to claim 1 or 2, wherein the controllable modulator is an electro-optical Q-switch.

4. Laser device according to claims 1 to 3, wherein an energy of a laser pulse generated by the laser device is greater than 50 mJ.

5. Laser device according to claims 1 to 4, wherein the laser medium is a crystal that is doped with thulium, holmium or erbium.

6. Laser device according to claims 1 to 5, wherein the laser medium comprises Brewster end faces.

7. Laser device according to claims 1 to 6, comprising a seed laser that injects a seed laser signal into the start cavity and/or the main cavity.

8. A method of operating a laser device according to claims 1 to 7, that includes following stages:
a. Pumping of the laser medium with a pre-set pump power, wherein the modulator blocks the start cavity.
b. Pumping operation is stopped and the modulator is switched to unblock the start cavity.
c. a laser beam builds up in the start cavity.
d. the phase-conjugate mirror (PCM) ignites and changes from high transparency to the mirror function.
f. the laser pulse continues to build up in the main cavity and part of the laser pulse is emitted through the outcoupling mirror.
Wherein after stage d. and before stage f. following stage is added:
e. switching the modulator to block the start cavity.

## Revendications

1. Dispositif laser comportant les caractéristiques suivantes :
a) Le dispositif laser comporte au minimum les éléments suivants, qui sont agencés l'un après l'autre le long de l'axe optique :
• un miroir de sortie,
• un milieu laser,
• un miroir à conjugaison de phase basé sur une diffusion Brillouin stimulée,
• un miroir final,
b) Le miroir de sortie et le miroir final forment un résonateur de démarrage,
c) Le miroir de sortie et le miroir à conjugaison de phase forment un résonateur principal,
d) entre le miroir à conjugaison de phase et le miroir final se trouve un commutateur de déclenchement,
**caractérisé en ce que,**
e) le commutateur de déclenchement est un modulateur commandable, et
f) le modulateur est conçu de telle façon qu'il peut être commuté par une unité d'ordinateur, en sorte qu'il bloque directement le résonateur de démarrage, une fois que le miroir à conjugaison de phase est passé de la passe au mode miroir.

2. Dispositif laser suivant la revendication 1, **caractérisé en ce que** le modulateur commandable et le miroir de conjugaison de phase sont conçus et coopèrent de telle façon que le rapport entre l'énergie laser du rayonnement laser, qui passe par le modulateur, et l'énergie laser totale du rayonnement laser, qui passe par le trajet du faisceau entre le milieu laser et le miroir à conjugaison de phase, est plus petit que 0,2.

3. Dispositif laser suivant l'une quelconque des revendications 1 et 2, **caractérisé en ce que** le modulateur est un commutateur de déclenchement électro-optique.

4. Dispositif laser suivant l'une quelconque des revendications 1 à 3, **caractérisé en ce que** le dispositif laser est conçu de telle sorte que l'énergie d'une impulsion laser produite dépasse 50 mJ.

5. Dispositif laser suivant l'une quelconque des revendications 1 à 4, **caractérisé en ce que** le milieu laser est un cristal dopé au thulium, à l'holmium ou à l'erbium.

6. Dispositif laser suivant l'une quelconque des revendications 1 à 5, **caractérisé en ce que** le milieu laser présente des surfaces d'extrémité de Brewster.

7. Dispositif laser suivant l'une quelconque des revendications 1 à 6, **caractérisé en ce que** le dispositif laser comprend un laser d'amorçage avec lequel un signal laser d'amorçage peut être injecté dans le résonateur de démarrage et/ou le résonateur principal.

8. Procédé de fonctionnement d'un dispositif laser suivant l'une quelconque des revendications 1 à 7, comprenant les étapes suivantes :
a. pompage du milieu laser à une puissance de pompage prédéterminée, le modulateur bloquant le résonateur de démarrage,
b. réglage du fonctionnement de pompage et commutation du modulateur sur libération du résonateur de démarrage,
c. une impulsion laser se forme dans le résonateur de démarrage,
d. le miroir à conjugaison de phase allume et passe d'une transmission de faisceau élevée à une fonction miroir,
f. l'impulsion laser continue à s'accumuler dans le résonateur principal et une partie de l'impulsion laser sort du miroir de sortie,
**caractérisé en ce que** après l'étape d. et avant l'étape f. l'étape suivante est insérée :
e. commutation du modulateur sur blocage du résonateur de démarrage.
